# EUROPÄISCHE PATENTSCHRIFT

(11) **EP 0 525 754 B1**
(45) Veröffentlichungstag und Bekanntmachung des Hinweises auf die Patenterteilung: **13.12.1995**
(21) Anmeldenummer: 92112957.3
(22) Anmeldetag: 29.07.1992
(51) Int. Cl.: G01D 5/14, F02M 3/06, G01D 5/16

(54) **Stellantrieb für eine Motorleerlaufsteuerung**
Actuator for the idle control of an engine
Dispositif de commande pour le contrôle du ralenti d'un moteur

(30) Priorität: 29.07.1991 JP 189054/91
(43) Veröffentlichungstag der Anmeldung: 03.02.1993
(73) Patentinhaber: ASMO CO. LTD., Kosai-shi Shizuoka-ken431-04 (JP)
(72) Erfinder: Hisanaga,Naogi, Kosai-shi, Shizuoka-ken 431-04 (JP); Terakura, Osamu, Lions Mansion 406, 9-1, Aza-, Midori-ku, Nagoya-shi, Aichi-ken 458 (JP); Nakano, Yuji, Toyota-shi, Aichi-ken 473 (JP); Koshimizu, Michio, Kariya-shi, Aichi-ken 448 (JP)
(74) Vertreter: Sperling, Rüdiger, Dipl.-Ing.

(56) Entgegenhaltungen:
- WO-A-90/09563
- DE-A- 3 613 200
- DE-U- 9 013 552
- US-A- 4 655 180

## Beschreibung

Die vorliegende Erfindung betrifft allgemein einen Stellantrieb für eine Motorleerlaufsteuereinrichtung. Insbesondere betrifft die Erfindung einen Stellantrieb zur Steuerung des Leerlaufs eines Fahrzeugmotors durch das Steuern des Öffnungsgrades einer Drosselklappe.

Im allgemeinen saugt ein herkömmlicher Einspritzmotor für ein Fahrzeug aus seiner Umgebung Luft über ein Einlaßkrümmerrohr an, das eine Drosselklappe enthält. Der Öffnungsgrad der Drosselklappe ist im allgemeinen proportional zu der am Gaspedal aufgewandten Kraft. Nimmt der Fahrer den Fuß vom Gaspedal, so wird die Drosselklappe vollständig geschlossen und unterbricht die Luftzufuhr zu den Zylindern des Motors. Da in diesem Fall nur zerstäubter Kraftstoff den Zylindern des Motors zugeführt wird, wird das Luft-Kraftstoffverhältnis sehr fett, und der Motor kann nicht in stabiler Leerlaufbedingung laufen.

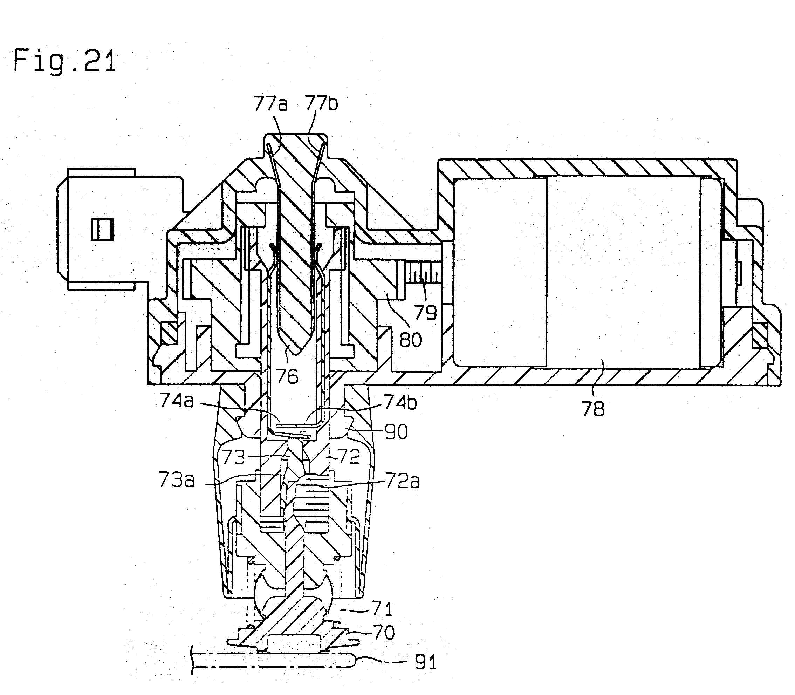

Um das Aufrechterhalten von stabilen Leerlaufbedingungen des Motors zu ermöglichen, wurde die Verwendung eines Stellantriebes vorgeschlagen, der in der japanischen ungeprüften Patentveröffentlichung Nr. 61-277830 (entspricht US-Patent Nr. 4 655 180) aufgezeigt ist, und der in Fig. 21 dargestellt ist. Der in Fig. 21 gezeigte Stellantrieb ist so konstruiert, daß er den Öffnungsgrad des Drosselventils steuert, um eine übermäßige Anreicherung des Luft-Kraftstoffverhältnisses zu verhindern, wenn das Gaspedal nicht gedrückt wird. Nachfolgend wird kurz der Betrieb des in Fig. 21 dargestellten Stellantriebes erläutert.

Mit dem Schließen der Drosselklappe stößt ein Drosselklappenhebel 91, der mit der Drosselklappe fest verbunden ist, an einen Stopper 70 des Stellantriebes in Fig. 21. Dadurch wird gemeinsam mit dem Stopper 70 ein Gleitstück 73 gegen die Kraft einer Feder 71 nach oben verschoben. Dabei kommen ein verschiebliches Kontaktelement 74a und ein feststehendes Kontaktelement 74b in einem Stößel 72 miteinander in Kontakt.

Im mittleren Bereich des Stellantriebes sind zwei Leiter 77a und 77b angeordnet, die mit einer nicht dargestellten elektrischen Steuereinheit (ECU) verbunden sind. Das verschiebbare Kontaktelement 74a kommt mit dem Leiter 77a in Kontakt, während das feststehende Kontaktelement 74b mit dem Leiter 77b Kontakt hat. Diese beiden Kontaktelemente 74a und 74b bilden einen Kontaktschalter. Durch den Kontakt zwischen den Kontaktelementen 74a und 74b erfaßt die ECU, daß die Drosselklappe vollständig geschlossen ist, und betätigt einen Motor 78.

Mit dem Motor 78 ist eine Motorwelle 79 verbunden, die die Drehbewegung auf ein Zahnrad 80 überträgt. Mit der Umdrehung des Zahnrades 80 kommt ein in der Innenwand des Zahnrades 80 ausgebildetes Innengewinde mit einem an der Außenfläche des Kopfbereiches des Stößels 72 ausgebildeten Außengewinde in Eingriff, um so den Stößel 72 nach unten zu stoßen.

Am Stößel 72 bzw. am Gleitstück 73 sind kegelförmige Kontaktflächen 72a bzw. 73a ausgebildet. Wenn der Stößel 72 nach unten gestoßen wird, kommen die Kontaktflächen 72a und 73a miteinander in Berührung und der Stopper 70 bewegt den Drosselklappenhebel 91 nach unten. Dadurch wird die vollständig geschlossene Drosselklappe geringfügig geöffnet und erlaubt den Durchtritt von Versorgungsluft zu den Zylindern des Motors. Anschließend führt die ECU eine rückgekoppelte Regelung des Motors 78 basierend auf den Werten der erfaßten Drehzahl des Motors durch, um den Motor auf eine vorgegebene Leerlaufdrehzahl einzustellen.

Beim Niederdrücken des Gaspedals nimmt der Öffnungsgrad der Drosselklappe zu. Dabei wird der Druck des Drosselklappenhebels 91 auf den Stopper 70 verringert. Der Stopper 70 bewegt sich durch die Kraft der Feder 71 nach unten und trennt das Kontaktelement 74a vom Kontaktelement 74b (d.h., daß der Kontaktschalter ausgeschaltet ist). Durch den AUS-Zustand des Kontaktschalters erfaßt die ECU, daß die Drosselklappe geöffnet ist, und beendet die Antriebssteuerung des Motors 78.

Bei vorstehend beschriebenem herkömmlichen Stellantrieb ist es erforderlich, daß das Kontaktelement 74a mit dem Leiter 77a Kontakt hat, daß das Kontaktelement 74b mit dem Leiter 77b Kontakt hat, und daß die beiden Kontaktelemente 74a und 74b miteinander in Kontakt kommen oder den Kontakt unterbrechen, jeweils in Übereinstimmung mit der Aufwärts- oder Abwärtsgleitbewegung des Gleitstückes 73. Kommt ein Fremdstoff zwischen das Kontaktelement 74a und den Leiter 77a oder zwischen das Kontaktelement 74b und den Leiter 77b oder zwischen die Kontaktelemente 74a und 74b, oder falls die Kontaktflächen der einzelnen Kontaktelemente nicht sauber sind, wird kein den EIN-Zustand des Kontaktschalters darstellendes Signal abgegeben, auch wenn die beiden Kontaktelemente 74a und 74b miteinander in Kontakt sind. In diesem Fall kann die ECU den Leerlaufbetrieb des Motors nicht in ordnungsgemäßer Weise steuern.

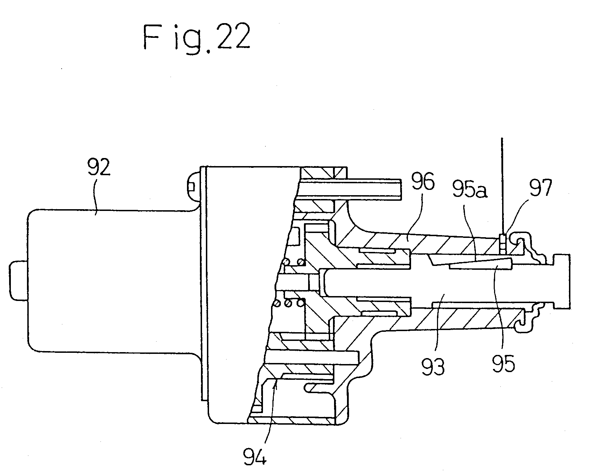

Weiter ist in der japanischen ungeprüften Gebrauchsmusterveröffentlichung Nr. 57-42129 ein anderer Typ eines Stellantriebs für die Drossellklappensteuerung aufgezeigt. Dieser Stellantrieb ist in Fig. 22 dargestellt und umfaßt einen Motor 92, eine verschiebliche Antriebswelle 93, die mit der Drosselklappe in fester Verbindung steht, und einen Zahnradtrieb 94 zum Umwandeln der Motordrehung in eine Verschiebebewegung der Antriebswelle. Ein Magnet 95 mit einer geneigten Fläche 95a ist auf die Antriebswelle 93 aufgesetzt. In einem Gehäuse 96 des Stellantriebes ist ein Magnetsensor 97 untergebracht.

Gemäß der Verschiebeposition der Antriebswelle 93 liegt der Magnetsensor 97 einem beliebigen Punkt der geneigten Fläche 95a gegenüber. Der Sensor 97 erfaßt den Magnetfluß in Übereinstimmung mit der Distanz zwischen dem gegenüberliegenden Punkt und dem Sensor 97 und gibt an die ECU ein Erfassungsignal ab, dessen Signalpegel der Größe des erfaßten Magnetflusses entspricht. Die ECU bestimmt die Stellung der Antriebswelle 93 auf der Basis der Größe des vom Sensor 97 abgegebenen Erfassungssignals.

Der vorstehend beschriebene herkömmliche Betrieb des Stellantriebs hat zwar nicht dieselben Nachteile wie die, die beim ersten Typ des herkömmlichen Stellantriebs auftreten. Der Sensor 97 kann jedoch nicht kleine Schwankungen des Magnetflusses, die durch geringe Verlagerungen der Antriebswelle 93 hervorgerufen werden, erfassen und kann daher keine exakte Leerlaufsteuerung ergeben.

Aus der deutschen Offenlegungsschrift DE 36 13 200 ist ein Positionssensor bekannt, bei welchem ein von der Position eines ersten Teils gegenüber einem zweiten Teil, welches in bezug auf das erste Teil beweglich ist, abhängiges elektrisches Signal mit Hilfe eines Hallelements ableitbar ist. Das Hallelement ist an dem ersten feststehenden Teil angenordnet, wohingegen an dem zweiten beweglichen Teil ein Permanent vorgesehen ist. Darüberhinaus ist am ersten Teil ein geschlossener magnetischer Kreis ausgebildet. Bei dieser Anordnung treten zwischen dem beweglichen Permanentmagnet und dem Magnetkern bzw. Hallelement Luftspalten auf, die den Kraftfluß negativ beinflussen. Zwar wird ausgeführt, daß die Luftspalte möglichst so klein zu wählen sei, wie es die Toleranzen der Lagerung des beweglichen Teils erlauben, jedoch läßt sich bei der dargestellten Ausführungsform das Entstehen von Luftspalten nicht vermeiden.

Der Erfindung liegt die Aufgabe zugrunde, eine Sensoreinrichtung der im Anspruch 1 beschriebenen Gattung sowie deren Verwendung in einem Stellantrieb für eine Motorleerlaufsteuerung anzugeben, die eine exakte Erfassung des durch die Bewegung der wesentlichen Bauteile erzeugten Magnetflusses und infolge eine genaue Steuerung ermöglicht

Zur Lösung der vorstehenden und weiterer Aufgaben gemäß dem Zweck der vorliegenden Erfindung ist ein verbesserter Stellantrieb für eine Motor-Leerlaufsteuerung vorgesehen, der eine in einem Einlaßkrümmerrohr angeordnete Drosselklappe und einen Drosselklappenhebel umfaßt, der in Übereinstimmung mit dem Öffnungsgrad de Drosselklappe zu positionieren ist.

Der Stellantrieb enthält eine verschiebbare Kolben- bzw. Stößeleinheit, eine Antriebseinrichtung zum zwangsweisen Verschieben der Kolbeneinheit gegen die Druckkraft des Drosselklappenhebels, eine Erfassungseinrichtung zum Erfassen einer geöffneten/geschlossenen Stellung der Drosselklappe und eine Steuereinheit zur Steuerung der Antriebseinrichtung in Reaktion auf die Erfassungseinrichtung, um das Drosselventil exakt zu steuern, wenn der Motor im Leerlauf läuft.

Die Kolbeneinheit ist so konstruiert, daß sie von dem Drosselklappenhebel wenigstens dann verschoben wird, wenn die Drosselklappe geschlossen ist. Die Antriebseinrichtung kann den Öffnungsgrad der Drosselklappe durch die Kolbeneinheit und den Drosselklappenhebel einstellen.

Die Erfassungseinrichtung umfaßt zwei Magnete sowie einen Sensor zum Erfassen des Magnetflusses der Magnete. Die Magnete sind in der Weise zueinander benachbart angeordnet, daß jeweils zwei Pole verschiedener Polarität aneinanderliegen. Die beiden Magnete oder der Sensor sind in derselben Richtung wie die Stößel- bzw. Kolbeneinheit verschieblich und werden von der Kolbeneinheit beim Schließen der Drosselklappe verschoben. Der Sensor erfaßt eine Veränderung des Magnetflusses bei einem derartigen Verschiebevorgang.

Die Erfindung wird unter Bezug auf die nachfolgende Beschreibung bestimmter beispielhafter Ausführungsformen in Verbindung mit den beiliegenden Figuren näher beschrieben. In den Figuren zeigen:
- Fig. 1: eine Schnittdarstellung des inneren Aufbaues eines Stellantriebes,
- Fig. 2: eine Draufsicht auf den in Fig. 1 gezeigten Stellantrieb mit abgenommener Abdeckung und Innenplatte,
- Fig. 3: eine Draufsicht auf den in Fig. 1 gezeigten Stellantrieb mit abgenommener Abdeckung,
- Fig. 4: eine Schnittdarstellung des Stellantriebes aus Fig. 1 vor dem Anbringen der Abdeckung, eines Dichtstopfens und eines Stoppers,
- Fig. 5: eine teilweise vergrößerte Schnittdarstellung der Umgebung eines Hallelements und eines Magnetpaares,
- Fig. 6: eine perspektivische Darstellung der Form des Magnetpaares,
- Fig. 7: eine schematische Darstellung von Fig. 5 zur Darstellung eines Kolbens, eines Zahnrades und der Magnete,
- Fig. 8: eine graphische Darstellung der Verteilung des Magnetflusses der Magnete,
- Fig. 9(A) und 9(B): schematische Darstellungen zur Erläuterung der Beziehung zwischen dem Hallelement und dem Magnetfluß der Magnete,
- Fig. 10: eine Draufsicht eines oberhalb einer inneren Platte vorhandenen Raumes, und
- Fig. 11: eine Draufsicht auf die Abdeckung zeigen.
- Fig. 12: eine teilweise vergrößerte Schnittdarstellung der Umgebung eines Hallelements, eines Magnetpaares und des oberen Bereiches eines Zahnrades,
- Fig. 13: eine schematische Darstellung von Fig. 12 zur Darstellung eines Kolbens, des Zahnrades und der Magnete,
- Fig. 14: eine vergrößerte Schnittdarstellung der Umgebung der Magnete, und
- Fig. 15, 16(A) und 16(B): schematische Darstellungen zur Erläuterung der Vorteile der Erfindung zeigen.
- Fig. 17 bis Fig. 20: zeigen weitere Ausgestaltungen der vorliegenden Erfindung, wobei:
- Fig.18: eine Schnittdarstellung der Anbringung der Einstellschraube an einem Zahnrad,
- Fig. 19: eine auseinandergezogene perspektivische Darstellung des Aufbaus des Basisbereichs einer Innenplatte und eines Anschlußsteckerelemente derselben, und
- Fig. 20: eine Draufsicht des Ineinandergreifens des Steckerelements mit einer Abdeckung darstellen.
- Fig. 21: ist eine Schnittdarstellung eines herkömmlichen Stellantriebes und
- Fig. 22: eine teilgeschnittene Darstellung einer weiteren Ausführungsform eines herkömmlichen Stellantriebs.

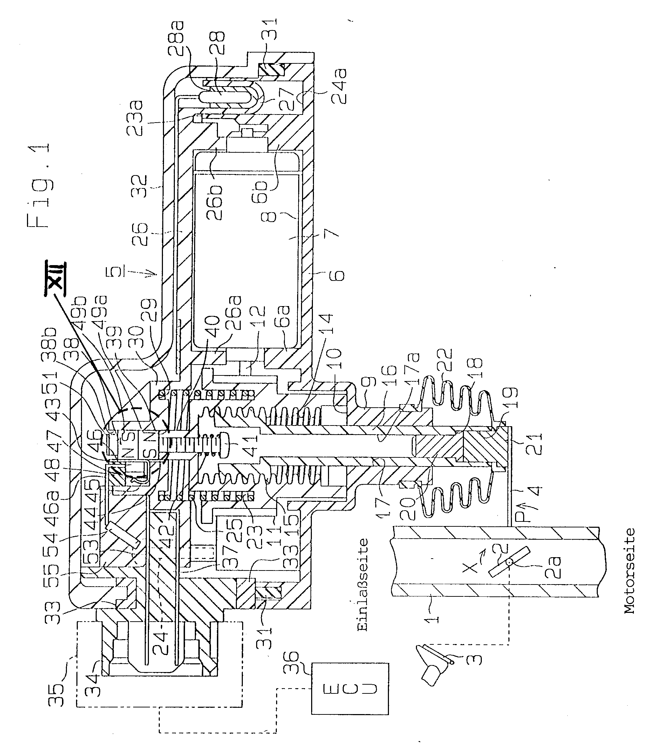

Wie Fig. 1 zeigt, ist in einem Ansaugkrümmerrohr 1 zur Zufuhr von Luft zu einem Motor eine Drosselklappe 2 angeordnet. Die Drosselklappe 2 (d.h. eine um eine Achse 2a drehbare Drehklappe) ist mit einem Gaspedal 3 verbunden. Die Drosselklappe 2 wird in Richtung eines Pfeiles X gedreht, wenn ein Fahrer auf das Gaspedal 3 tritt, und wird in eine dem Pfeil X entgegengesetzte Richtung durch die Wirkung einer nicht dargestellten Rückstellfeder gedreht, wenn der Fahrer den Fuß vom Gaspedal 3 nimmt. Anders ausgedrückt ist der Öffnungsgrad der Drosselklappe 2 eine Funktion der auf das Gaspedal 3 wirkenden Kraft.

Nimmt der Fahrer den Fuß vom Gaspedal 3, so wird die Drosselklappe 2 in Schließrichtung gedreht. Wenn der Motor im Leerlauf läuft, so wird der Öffnungsgrad der Drosselklappe 2 entsprechend der Wirkung eines Stellantriebes 5 eingestellt. Der Aufbau des Stellantriebes 5, der die Steuerung der Öffnung durchführt, wird nachfolgend erläutert.

An der Drehachse 2a der Drosselklappe 2 ist ein Drosselklappenhebel 4 angeordnet, der die Übertragung der Bewegung zwischen dem Stellantrieb 5 und der Drosselklappe 2 ermöglicht. Der Drosselklappenhebel 4 wird daher in einer einem Pfeil P entgegengesetzten Richtung geschwenkt, wenn das Gaspedal 3 niedergetreten wird. Fällt die Druckkraft am Gaspedal 3 weg, so wird der Drosselklappenhebel 4 in Richtung P geschwenkt und kommt so mit der Unterseite des Stellantriebes 5 in Berührung und übt auf diesen Druck aus.

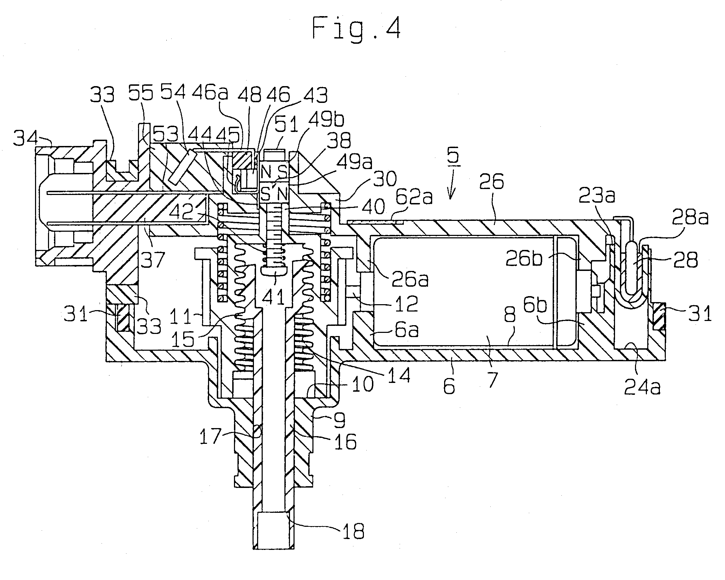

Wie in Fig. 1 und 4 dargestellt, ist ein Gehäuseunterteil 6 des Stellantriebes 5 mit zwei Sockeln 6a und 6b versehen, die in dessen Mitte bzw. an dessen rechter Seite in einem Stück angeformt sind. Ein Motor 7 ist in einer Aufnahmevertiefung 8, die zwischen den beiden Sockeln 6a und 6b ausgebildet ist, angeordnet. Das Gehäuseunterteil 6 verfügt weiter über einen Vorsprung 9 an der linken Seite, der sich vom Gehäuseunterteil 6 nach unten erstreckt. Der Vorsprung 9 hat eine allgemein zylindrische Form mit einem ringförmigen horizontalen Querschnitt und verfügt über eine Aufnahmeöffnung 10 und über eine innere Öffnung 17. Die untere Hälfte eines drehbaren Zahnrades 11 ist in die Aufnahmeöffnung 10 eingesetzt.

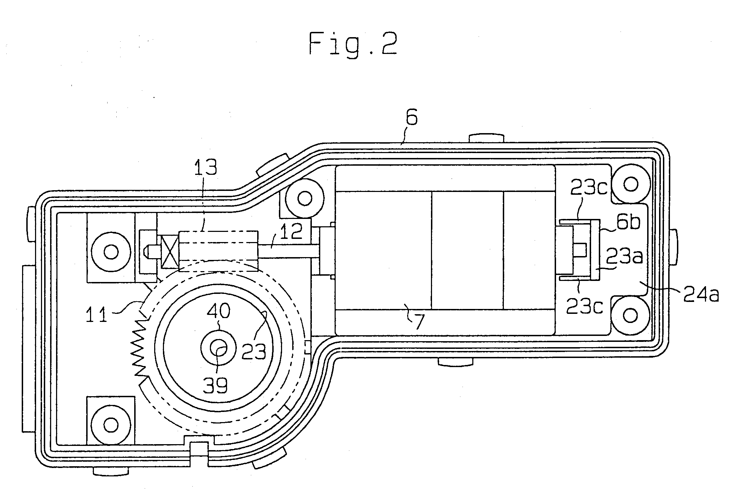

Wie Fig. 2 zeigt, ist an einer Motorwelle 12 des Motors 7 ein Schneckenrad 13 angebracht. Das Schneckenrad 13 steht mit den am äußeren Umfang des Zahnrades 11 ausgebildeten Zähnen in Eingriff. Wenn der Motor 7 angetrieben wird, dreht sich das Zahnrad 11.

Wie Fig. 1, 2 und 4 zeigen, ist an der Oberseite des Zahnrades 11 eine erste kreisförmige Positioniervertiefung 23 ausgebildet und an einer Innenwand ein Innengewinde 14, das nach unten offen ist. An einem Stößel bzw. Kolben 16 ist ein Außengewinde 15 ausgebildet, das mit dem Innengewinde 14 in Eingriff steht. Der untere Endbereich des Kolbens 16 durchdringt die innere Öffnung 17 des Vorsprunges 9 und ragt über das Gehäuseunterteil 6 hinaus.

Der Kolben 16 weist eine in axialer Richtung ausgerichtete erste durchgehende Bohrung 17a und eine zweite durchgehende Bohrung 19 auf, die einen größeren Innendurchmesser als die erste durchgehende Bohrung 17a aufweist. Ein Dichtstopfen 20 ist in die Bohrung 17a und die Bohrung 19 eingesetzt. Der Dichtstopfen 20 hat einen T-förmigen vertikalen Querschnitt und liegt an einer Schulter 18 an, die am Übergang zwischen den Bohrungen 17a und 19 ausgebildet ist. Ein Stopper 21 für den Stopfen mit einem T-förmigen vertikalen Querschnitt ist ebenfalls in die zweite Bohrung 19 eingesetzt.

Eine als Faltenbalg ausgebildete Gummidichtmanschette 22 ist am unteren Abschnitt des Vorsprunges 9 angeordnet. Das obere Ende der Manschette 22 ist am Umfang des unteren Bereiches des Vorsprunges 9 befestigt und das untere Ende zwischen dem unteren Ende des Kolbens 16 und dem Stopper 21 gehalten. Die Dichtmanschette 22 verhindert daher, daß Fremdstoffe, wie etwa Staub, in das Gehäuseunterteil 6 durch die Öffnung 17 des Vorsprunges 9 und die Bohrungen 17a und 19 des Kolbens 16 eindringen können.

Wie Fig. 1 und 2 zeigen, ist der Sockel 6b mit einem nach oben sich erstreckenden elastischen Ansatz 23a versehen, wobei jeweils an den Seiten des elastischen Ansatzes 23a zwei Preßstücke 23c angeordnet sind. Rechts vom Sockel 6b ist im Gehäuseunterteil 6 eine Ausnehmung 24a ausgebildet.

Wie Fig. 1, 3 und 4 zeigen, ist eine Innenplatte 26 an der Oberseite des Gehäuseunterteils 6 mittels mehrerer Schrauben 24 befestigt. Die Innenplatte 26 ist mit Preßstücken 26a und 26b versehen, die an ihrer Unterseite aus einem Stück angeformt sind, und die jeweils den Sockeln 6a und 6b gegenüberliegen. Die Preßstücke 26a und 26b und die Sockel 6a und 6b halten den Motor 7 sicher.

Weiter ist am rechten Endbereich der Innenplatte 26 ein Einführabschnitt 27 mit einem U-förmigen Querschnitt ausgebildet. Im Einführabschnitt 27 ist mittels eines in diesen gefüllten Kunststoffmasse 28a ein erster Kondensator 28 befestigt. Der erste Kondensator 28 ist parallel an den Motor 7 angeschlossen.

Der Einführabschnitt 27 wird in die Ausnehmung 24a des Gehäuseunterteils 6 eingeführt. Das Einführen des Einführabschnittes 27 biegt den elastischen Abschnitt 23a auf den Motor 7 zu und preßt die beiden Preßstücke 23c gegen den Motor 7. Die beiden Preßstücke 23c beschränken die Bewegung des Motors 7 in axialer Richtung und halten dadurch den Motor 7 fest in seiner Aufnahmevertiefung 8 im Gehäuseunterteil 6. Da zusätzlich der Einführabschnitt 27 in der Einführausnehmung 24a fixiert ist, wird der rechte Endabschnitt der Innenplatte 26 vom Gehäuseunterteil 6 gehalten.

Die Innenplatte 26 ist weiterhin in ihrem linken Endabschnitt mit einem nach oben ragenden Basisbereich 30 versehen. An der Unterseite des Basisbereiches 30 ist eine ringförmige zweite Positioniervertiefung 29 ausgebildet. Zwischen dem Zahnrad 11 und dem Basisbereich 30 ist eine Schraubenfeder 25 angeordnet. Das untere Ende der Feder 25 steht mit der ersten Positioniervertiefung 23 des Zahnrades 11 in Eingriff und das obere Ende mit der zweiten Positioniervertiefung 29.

Die Feder 25 drückt das Zahnrad 11 nach unten und preßt es gegen den Boden der Aufnahmeöffnung 10. Wird das Zahnrad 11 vom Motor 7 angetrieben, so gleitet der Kolben 16 aufwärts und abwärts, bedingt durch den Eingriff zwischen dem Innengewinde 14 und dem Außengewinde 15.

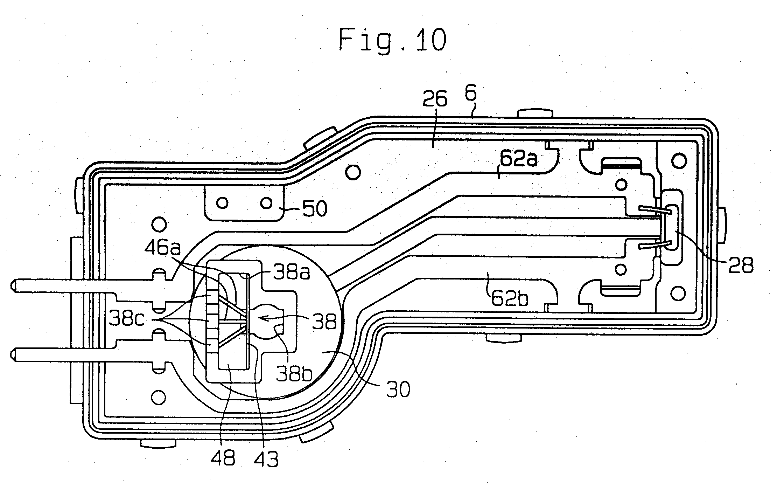

Auf der Oberseite der Innenplatte 26 sind, wie in Fig. 10 dargestellt, zwei Leiterbahnen 62a und 62b vorgesehen. Die äußeren Enden der Leiterbahnen 62a und 62b ragen nach außen über das Äußere des Gehäuseunterteils 6 hinaus. Die Leiterbahnen 62a und 62b sind mit dem Motor 7 und dem ersten Kondensator 28 verbunden.

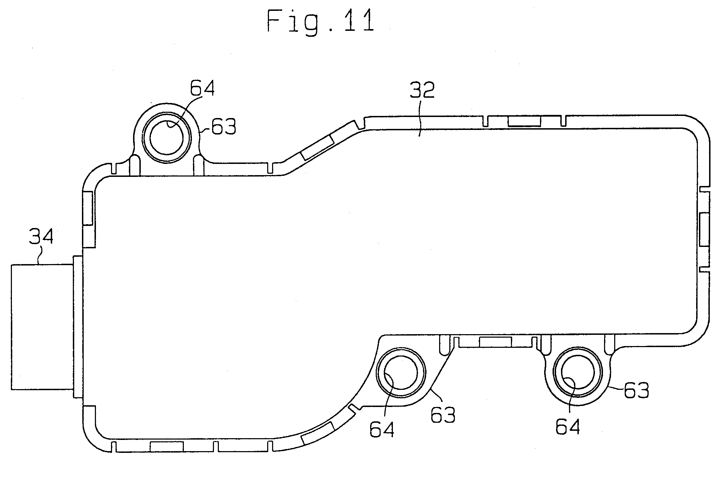

Am Gehäuseunterteil 6 ist mit einer Dichtung 31 ein Deckel 32 angebracht. Wie Fig. 11 zeigt, ist am Deckel 32 entlang seinem Umfang ein Flansch 63 eingeformt. Im Flansch 63 sind mehrere Löcher 64 ausgebildet. Der Stellantrieb 5 wird im Motorraum durch Anziehen von Schrauben an vorgegebenen Positionen im Motorraum des Fahrzeugs über den Flansch 63 befestigt.

Wie Fig. 1 zeigt, ist mit einer Dichtung 33 zwischen dem Gehäuseunterteil 6 und dem Deckel 32 im linken Endbereich des Stellantriebs 5 ein Steckelement 34 eines Steckverbinders (34, 35) angebracht. Die äußeren Endabschnitte der Leiterbahnen 62a und 62b sind im Steckelement 34 angeordnet. Das Steckelement 34 ist durch ein Steckergegenstück 35 des Steckverbinders (34, 35) (in unterbrochenen Linien dargestellt) mit einer elektrischen Steuereinheit (ECU) 36 verbunden, die elektronisch den Motor und das Automatikgetriebe steuert. Der Motor 7 wird demgemäß über den Steckverbinder (34, 35) mit der ECU 36 verbunden und unter Steuerung der ECU 36 angetrieben.

Wie in Fig. 1 und 4 dargestellt, ist am Steckelement 34 ein verlängerter Ansatz 37 vorgesehen, der horizontal nach rechts vorragt. Dieser verlängerte Ansatz 37 steht mit dem linken Endabschnitt der Innenplatte 26 in Eingriff. Wird das Steckelement 34 an der Abdeckung 32 und dem Gehäuseunterteil 6 angebracht, so drückt der Ansatz 37 gegen den linken Endabschnitt der Innenplatte 26 und hält so die Innenplatte 26 stabil am Gehäuseunterteil 6.

Im oberen Abschnitt des Basisbereiches 30 ist ein Raum 38 ausgebildet, wie in Fig. 10 dargestellt. Dieser Raum 38 umfaßt einen ersten Raum 38a, der eine allgemein rechteckige Grundfläche hat, und einen zweiten Raum 38b, der eine allgemein quadratische Grundfläche einnimmt. Der erste und zweite Raum 38a und 38b werden von einem ebenen Metalltrennglied 43 begrenzt, das im ersten Raum 38a angeordnet ist. In der Wand des Basisbereichs 30, die an den ersten Raum 38a angrenzt, sind mehrere Schlitze 38c ausgebildet.

Weiter weist der Basisbereich 30 eine Bohrung 39 auf, die an einer dem zweiten Raum 38b entsprechenden Position, wie in Fig. 1 gezeigt angeordnet ist. Eine an der Oberseite des Zahnrades 11 ausgebildete Buchse 40 ist drehbar in die Bohrung 39 eingesetzt. In der Buchse 40 ist gegen die Druckkraft einer Regulierfeder 42 eine Einstellschraube 41 angebracht. Die Regulierfeder 42 ist zwischen dem Zahnrad 11 und der Einstellschraube 41 angeordnet. Die Einstellschraube 41 ist lang genug, daß sie nach oben über das obere Ende der Buchse 40 herausragt. Wenn das Zahnrad 11 in Umdrehung versetzt wird, dreht sich die Einstellschraube 41 mit dem Zahnrad 11.

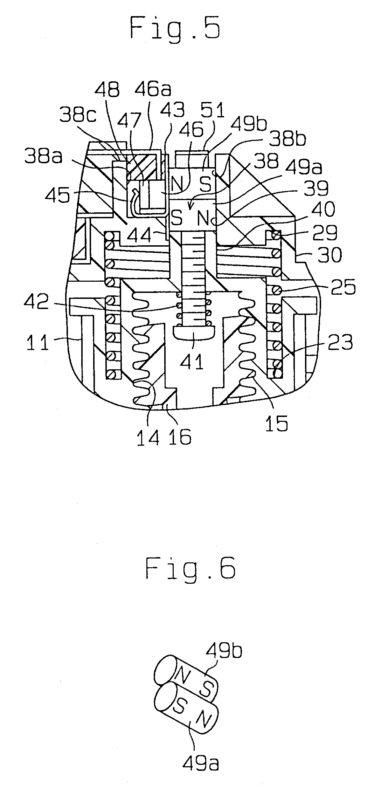

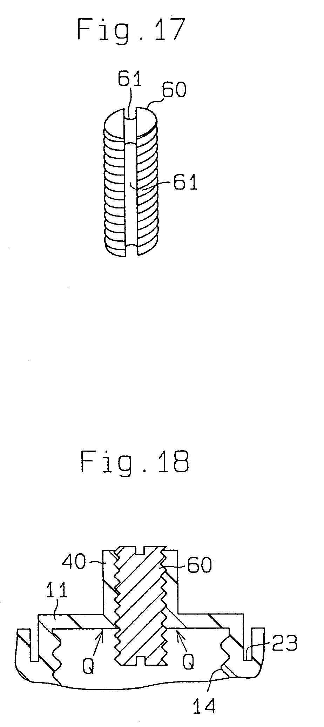

Wie Fig. 5 zeigt, sind am Trennglied 43 in seinem unteren mittleren Bereich ein in den Basisbereich 30 einzuführendes Einsetzstück 44 und an den jeweiligen Seiten des Einsetzstückes 44 zwei Halter 45 (siehe Fig. 18) ausgebildet und auf den ersten Raum 38a zu umgebogen. Die Halter 45 nehmen ein Hallelement 46 und einen am Element 46 anliegenden metallenen Stützbügel 47 auf.

Auf die Oberseite des ersten Raumes 38a ist eine Kunststoffkappe 48 aufgesetzt. Die Kappe 48 hält das Hallelement 46 stabil im ersten Raum 38a. Das Hallelement 46 ist mit Ausgangsanschlüssen 46a versehen, die entlang dem Inneren der Kappe 48 verlaufen.

Zwei in Fig. 6 dargestellte zylindrische Magnete 49a und 49b sind verschieblich im zweiten Raum 38b gehalten. Bei dieser Ausführungsform sind beide Magnete 49a und 49b dergestalt angeordnet, daß der S-Pol des unteren Magneten 49a und der N-Pol des oberen Magneten 49b auf das Hallelement 46 zu weisen.

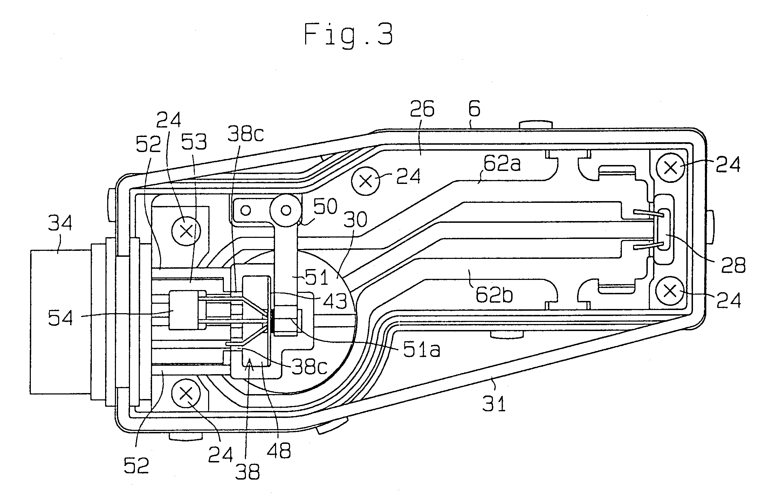

Wie in Fig. 3 und 10 dargestellt, ist ein Ende einer Blattfeder 51 in einem an der Innenplatte 26 ausgebildeten Bett befestigt. Das freie Ende 51a der Blattfeder 51 ist nach unten umgebogen und liegt am Magneten 49b an. Die Blattfeder 51 drückt also die beiden Magnete 49a und 49b nach unten, so daß die Magnete 49a und 49b aneinanderliegend stabil in der Bohrung 39 zwischen der Einstellschraube 41 und der Blattfeder 51 gehalten sind.

An der Oberseite des verlängerten Ansatzes 37 des Steckelementes 34 sind zwei Wände 52 dergestalt ausgebildet, daß sie parallel zur Längsrichtung des Stellantriebes 5 und zueinander in einer der Breite des ersten Raumes 38 entsprechenden Entfernung beabstandet verlaufen. Zwischen den Wänden 52 und der den ersten Raum 38a bildenden Wand ist ein Aufnahmeraum 53 ausgebildet.

Wie Fig. 1 zeigt, ist im Aufnahmeraum 53 ein zweiter Kondensator 54 mittels Klebstoff 55 zum elektrischen Schutz des Hallelements 46 angeordnet. Der zweite Kondensator 54 ist an die Ausgangsanschlüsse 46a des Hallelements 46, die in den Schlitzen 38c verlaufen, angeschlossen. Ein Teil des Klebstoffes 55 füllt den Aufnahmeraum 53 und dringt in die Schlitze 38c ein, wo er an einem Teil der Seite der Kappe 48 anhaftet.

Wird bei dem dergestalt aufgebauten Stellantrieb das Gaspedal 3 niedergedrückt, so wird der Drosselklappenhebel 4 in der vom Kolben 16 abgewandten Richtung (in der der Richtung P entgegengesetzten Richtung) geschwenkt. Dadurch wird die Druckkraft des Drosselklappenhebels 4 auf den Kolben 16 entfernt, so daß das Zahnrad 11 und der Kolben 16 durch die Wirkung der Feder 25 in ihre in Fig. 1 dargestellte Ausgangsstellungen rückgestellt werden. Dabei werden auch die Magnete 49a und 49b durch die Wirkung der Blattfeder 51 in ihre in Fig. 1 und 5 dargestellte Ausgangsposition gebracht.

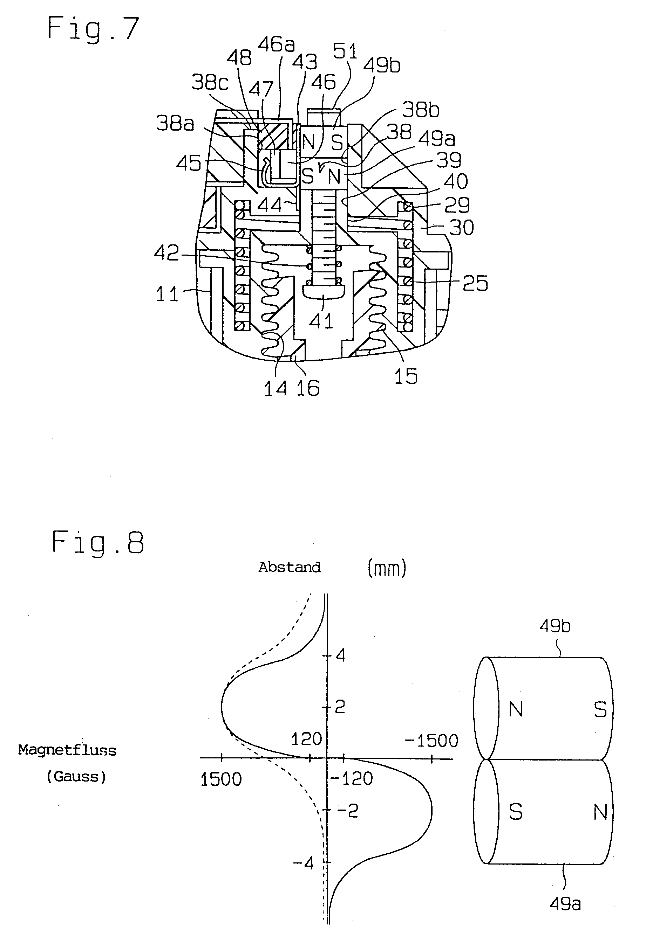

Wenn die Druckkraft vom Gaspedal 3 abgenommen wird, wird der Drosselklappenhebel 4 nach und nach auf den Kolben 16 zu (in Richtung P) geschwenkt. Wird der Fuß des Fahrers vom Gaspedal 3 weggenommen, so wird der Drosselklappenhebel 4 weiter in Richtung P geschwenkt und drückt den Kolben 16 nach oben. Die Aufwärtsbewegung des Kolbens 16 verschiebt das Zahnrad 11 und die Magnete 49a und 49b gegen die Kraft der Feder 25 und der Blattfeder 51 in die in Fig. 7 dargestellten Stellungen.

Die Betriebsabläufe des vorstehend beschriebenen Stellantriebs 5 werden nachfolgend erläutert.

Wird das Gaspedal 3 beim Aktivieren des Motors niedergedrückt, so wird der Drosselklappenhebel in Übereinstimmung mit der Stärke des Niederdrückens in eine der Richtung P entgegengesetzte Richtung geschwenkt. In diesem Fall werden die beiden Magnete 49a und 49b nicht verschoben und in den in Fig. 1 und 5 gezeigten Stellungen gehalten. Das Hallelement 46 erfaßt daher nur den N-Pol des Magneten 49b und erfaßt keine Änderung des Magnetflusses, die ansonsten durch die Aufwärts/Abwärts-Bewegung der Magnete verursacht wird.

Das Hallelement 46 gibt über den Steckverbinder (34, 35) ein Erfassungssignal an die ECU 36 ab. Auf der Basis des Erfassungssignals vom Hallelement 46 erfaßt die ECU 36 die Öffnungsstellung der Drosselklappe 2. In diesem Fall hemmt die ECU 36 die Drehung des Zahnrades 11 durch Anhalten des Motors 7 und führt keine Öffnungssteuerung der Drosselklappe 2 (d.h. keine Leerlaufsteuerung des Motors) unter Verwendung des Stellantriebes 5 durch.

Wenn das Gaspedal 3 vollständig freigegeben wird, schwenkt der Drosselklappenhebel 4 in Richtung P und drückt den Kolben 16 nach oben. Das Zahnrad 11 wird gemeinsam mit der Einstellschraube 41 gegen die Druckkraft der Feder 25 nach oben bewegt und verursacht eine Verschiebung der Magnete 49a und 49b nach oben. Durch die Bewegung der Magnete 49a und 49b erfaßt das Hallelement 46 eine Veränderung des erfaßten Magnetflusses vom N-Pol (Magnet 49b) zum S-Pol (Magnet 49a).

Auf der Basis eines Signals vom Hallelement 46, das eine Veränderung des erfaßten Magnetflusses anzeigt, stellt die ECU 36 fest, daß die Drosselklappe 2 vollständig geschlossen ist. Daraufhin treibt die ECU 36 den Motor 7 an, um das Zahnrad 11 in Umdrehung zu versetzen. Mit der Drehung des Zahnrades 11 wird durch den Eingriff des Innengewindes 14 mit dem Außengewinde 15 der Kolben 16 nach unten bewegt und damit der Drosselklappenhebel 4 durch den Stopper 21 ebenfalls nach unten geschoben. Durch das Schwenken des Drosselklappenhebels 4 in die der Richtung P entgegengesetzte Richtung wird die Drosselklappe 2 geöffnet. Dadurch wird der Öffnungsgrad der Drosselklappe 2 als Funktion der Drehzahl des Motors 7 bestimmt. Diese Öffnungsregelung hält die Leerlaufdrehzahl des Motors auf einem allgemein konstanten Wert.

Auch wenn also der Fahrer den Fuß vom Gaspedal 3 nimmt, stellt die ECU 36 den Öffnungsgrad der Drosselklappe durch den Stellantrieb 5 ein und verhindert so, daß die Luftzufuhr zum Motor unterbrochen wird. So wird weiterhin dem Motor Luft zugeführt, und eine Anreicherung des Luft-Kraftstoffverhältnisses wird verhindert. Die ordnungsgemäße Regelung des Luft-Kraftstoffverhältnisses führt zu einem stabilen Leerlauf des Motors.

Da die Position der Drosselklappe 2 anders als nach dem Stand der Technik anhand der Erfassung des Magnetflusses durch das Hallelement 46 erfaßt wird, kann gemäß dieser Ausführungsform die Positionserfassung der Drosselklappe 2 nicht durch Fremdstoffe, die in den Stellantrieb 5 eindringen, außer Funktion gesetzt werden.

Bei dieser Ausführungsform erfaßt das Hallelement 46 eine Veränderung des Magnetflusses, die durch das Verschieben der beiden Magnete 49a und 49b, die unmittelbar aneinander in der Weise angeordnet sind, daß unterschiedliche Magnetpole aneinanderliegen, verursacht wird. Auch wenn der Kolben 16 (die Magnete 49a und 49b) nur geringfügig verschoben wird, kann das Hallelement 46 eine Veränderung des Magnetflusses erfassen, wie nachfolgend noch im Detail unter Bezug auf Fig. 8 erläutert wird.

Fig. 8 ist eine graphische Darstellung der Beziehung zwischen dem Abstand vom aneinanderliegenden Bereich der beiden Magnete 49a und 49b und dem Magnetfluß an einzelnen Punkten. Die in durchgezogener Linie dargestellte Kurve gibt die Verteilung des Magnetflusses der beiden Magnete 49a und 49b wieder. Die Verteilung der in durchgezogener Linie dargestellten Kurve gibt einen Bereich in der Nähe des aneinanderliegenden Bereiches wieder, in dem die Veränderung des Magnetflusses bedingt durch die aneinanderliegende Anordnung der Magnete besonders groß ist. Die unterbrochene Linie gibt die Verteilung des Magnetflusses für den Fall wieder, in dem der untere Magnet 49a entfernt ist und nur der obere Magnet 49b vorhanden ist.

Das in dieser Ausführungsform verwendete Hallelement 46 erfaßt einen Magnetfluß im Bereich von 0 bis 120 G. Das Hallelement 46 kann daher die Änderung des Magnetflusses auch bei geringfügigen Verschiebungen der Magnete um so genauer erfassen, je größer eine Veränderung des Magnetflusses bei einer Verschiebung der Magnete wird. Bei der tatsächlichen Messung ist das Änderungsverhältnis des Magnetflusses im Bereich von 0 bis 120 G annähernd 1000 G/mm mit zwei Magneten 49a und 49b und annähernd 100 G/mm mit einem Magneten 49b.

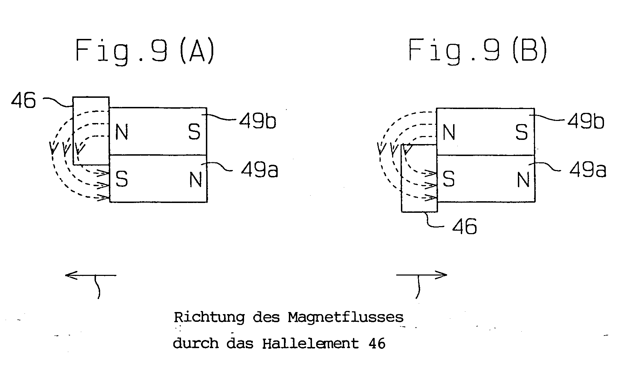

Wie Fig. 9(A) und 9(B) zeigen, besteht an der linken Seite des Magnetpaares (49a, 49b) ein auf das Hallelement 46 zu gerichteter Magnetfluß. Dieser Magnetfluß umfaßt Magnetlinien, die allgemein kreisförmig vom Nordpol des oberen Magneten 49b zum Südpol des unteren Magneten 49a gebogen sind. Wenn das Magnetpaar (49a, 49b) mit der in Fig. 8 durch die ausgezogene Linie dargegebenen Magnetflußverteilung verschoben wird, erfaßt das Hallelement 46 eine Veränderung des Magnetflusses als Funktion dieser Verteilung.

In Fig. 9 (A) durchdringen die vom Nordpol des Magneten 49b nach links gerichteten Magnetlinien, die der oberen Hälfte der Magnetflußverteilung in Fig. 8 entsprechen, den Mittelbereich des Hallelements 46. Damit erfaßt das Hallelement 46 im wesentlichen einen nach links gerichteten Magnetfluß. In Fig. 9(B) durchdringen die zum Südpol des Magneten 49a von links zurücklaufenden Magnetlinien, die der unteren Hälfte der in Fig. 8 gezeigten Magnetflußverteilung entsprechen, die Mitte des Hallelements 46. Entsprechend erfaßt das Hallelement 46 im wesentlichen einen nach rechts gerichteten Magnetfluß.

Wenn das Magnetpaar zwischen den in Fig 9(A) und 9(B) gezeigten Positionen verschoben wird, wird die Richtung des Magnetflusses durch das Hallelement 46 immer umgekehrt. Auch bei einer geringfügigen Verschiebung des Magnetpaares wird im Hallelement 46 dadurch eine plötzliche Änderung des Magnetflusses verursacht, was eine exakte Erfassung ermöglicht.

Wenn im Gegensatz dazu nur ein Magnet verwendet wird, findet im Hallelement keine Umkehrung der Richtung des Magnetflusses statt. Dadurch ist ein nur einem Magneten gegenüberliegend angeordnetes Hallelement einer geringfügigen Verschiebung des Magneten gegenüber nicht empfindlich, und es kann nicht immer einen Magneten erfassen, der eine vorgegebene Position erreicht. Bei jeder Aufwärts/Abwärts-Verschiebung des Magnets erfaßt das Hallelement oftmals den Magnet in einer von der vorher erfaßten Stellung unterschiedlichen Stellung. Derartige fehlerhafte Erfassungen sind für eine exakte Leerlaufsteuerung nachteilig.

Gemäß dieser Ausführung ist durch das Vorsehen von zwei Magneten 49a, 49b die Position, an der das Hallelement 46 das Magnetpaar erfaßt, immer konstant. Daher kann das Hallelement 46 das vollständige Schließen der Drosselklappe 2 exakt und rasch erfassen, wenn die Ausgangsposition des Magnetpaares einmal exakt eingestellt ist, so daß das Erfassen einer Änderung des Magnetflusses durch das Hallelement 46 mit dem vollständigen Schließen der Drosselklappe 2 synchronisiert ist.

Aus vorstehender Beschreibung wird deutlich, daß die Verwendung von zwei Magneten 49a und 49b es ermöglicht, daß das Hallelement 46 geringe Verschiebungen des Kolbens 16 exakt erfaßt. Dies führt weiterhin zu einer Größenverringerung des Stellantriebes 5. Wenn es möglich ist, einen großen Hub des Kolbens 16 sicherzustellen, kann nur ein einzelner Magnet 49a oder 49b ausreichen. Wenigstens 3 aneinandergereihte Magnete können verwendet werden, wobei jeweils verschiedene Magnetpole nebeneinander angeordnet werden.

In dieser Ausführungsform zieht der metallische Stützbügel 47, der an der Rückseite des Hallelements 46 angeordnet ist, einen stärkeren Magnetfluß an, der von den Magneten 49a und 49b erzeugt wurde. Die vom Hallelement 46 erfaßte magnetische Energie nimmt daher zu und verbessert so die Empfindlichkeit des Hallelements 46.

Vor dem Einsetzen des Dichtstopfens 20 und des Stoppers 21 in die erste Öffnung 17 und die zweite Bohrung 19 des Kolbens 16 (der in Fig. 4 gezeigte Zustand) kann die Einstellschraube 41 gedreht werden, um relativ zu Buchse 40 des Zahnrades 11 eine Veränderung nach oben oder nach unten zu erzielen. Gemäß dieser Ausführungsform kann daher die Stellung der beiden Magnete 49a und 49b, die von der Blattfeder 51 beaufschlagt sind, ohne weiteres durch die Einstellschraube 41 eingestellt werden.

Bei dieser Ausführungsform dringt der in den Aufnahmeraum 53 gefüllte Klebstoff 55 teilweise auch in die Schlitze 38c ein, so daß er an Teilen der Seite der Kappe 48 anhaftet. Auch bei Vibrationen des Fahrzeuges wird daher die Kappe 48 wegen des Klebstoffes 55 nicht vom ersten Raum 38a gelöst. Wird hingegen die Kappe 48 abgenommen, um das Hallelement 46 zu ersetzen, so kann die Kappe 48 ohne weiteres vom ersten Raum 38 gelöst werden, da die Haltekraft des Klebstoffes 55 an der Kappe 48 ohne weiteres überwunden werden kann.

Wenn der in Richtung P schwenkende Drosselklappenhebel 4 am Kolben 16 anschlägt, wird der Anprall über den Gehäuseunterteil 6 und die Innenplatte 26 auf den Deckel 32 übertragen. Die zwischen der Innenplatte 26 und dem Deckel 32 angeordneten Dichtungen 31 und 33 dämpfen den von der Innenplatte 26 auf den Deckel 32 übertragenen Anprall. Dies verringert auch den vom Deckelflansch 63 auf die Schrauben zur Befestigung des Deckels 32 in einer bestimmten Stellung im Motorraum übertragenen Stoß. Das heißt, daß der Stellantrieb 5 fest im Motorraum angebracht werden kann. Da der Flansch 63 nicht breit ausgeführt sein muß, kann der Deckel 32 leichter und kompakter ausgebildet sein.

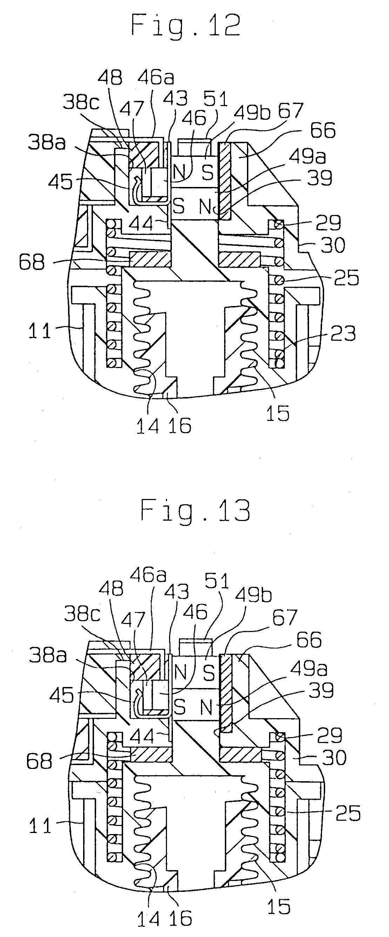

In Fig. 12 ist der Ausschnitt XII von Fig.1 mit der erfindungsgemäßen Ausbildung dargestellt, welcher den Basisbereich 30 der Innenplatte 26 des Stellantriebes zeigt.

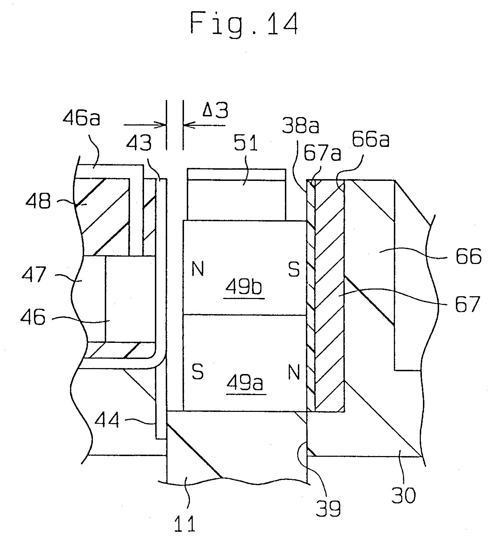

Wie Fig. 14 zeigt, ist in einer Wand 66, die dem Hallelement 46 gegenüberliegt und den zweiten Raum 38b begrenzt, eine Ausnehmung 66a vorgesehen. In der Ausnehmung 66a ist ein Eisenstück 67 angebracht, dessen offenliegende Fläche mit einer Kunststoffschicht 67a abgedeckt ist. Die Kunststoffschicht 67a besteht aus einem Kunststoff, wie etwa Nylon oder Teflon, der über hervorragende Gleit- und Verschleißeigenschaften verfügt. Das Eisenstück 67 kann auch aus einem anderen Metall oder einer magnetischen Legierung bestehen.

Die Magnete 49a und 49b haften aufgrund ihrer eigenen Magnetkraft fest über die Kunststoffschicht 67a am Eisenstück 67 an. Bei einer Aufwärts- oder Abwärtsbewegung des Kolbens 16 und des Zahnrades 11 gleiten beide Magnete 49a und 49b entlang dem Eisenstück 67, wie in Fig. 12 und 13 dargestellt.

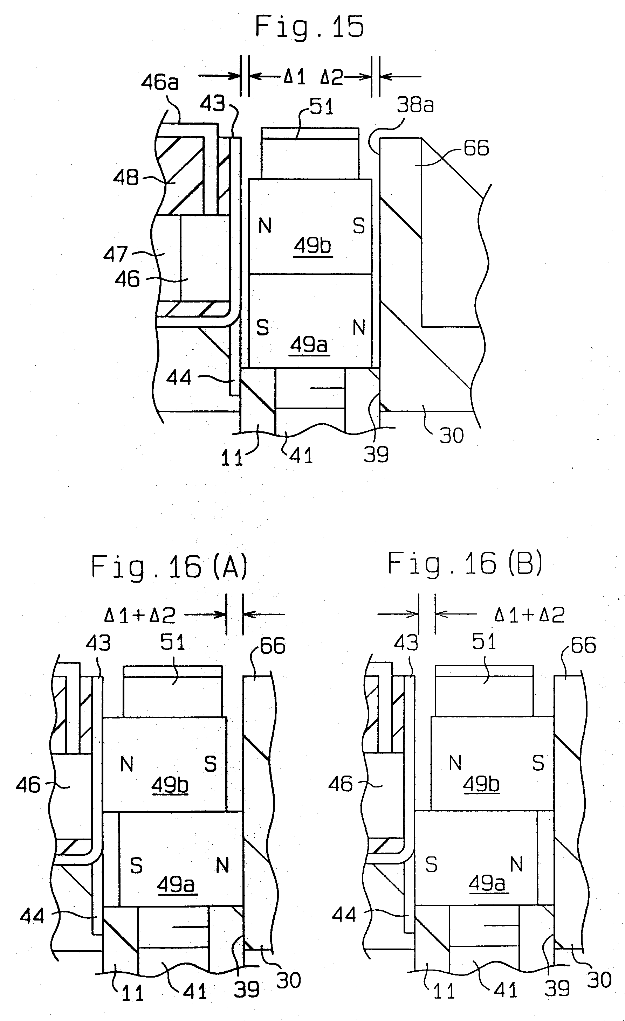

Fig. 15 zeigt eine Halterung der verschieblichen Magnete 49a und 49b, die das vorstehend erwähnte Eisenstück 67 nicht enthält. In dieser Konstruktion können jeweils Abstände D₁ und D₂ zwischen den linken Endflächen der Magnete 49a und 49b und dem Trennglied 43 und den rechten Endflächen der Magnete 49a und 49b und der Wand 66 vorhanden sein. Die Abstände D₁ und D₂ erlauben das Aufwärts- bzw. Abwärtsverschieben der beiden Magnete 49a und 49b.

Die Abstände D₁ und D₂ können jedoch, wie in Fig. 16(A) und 16(B) dargestellt, eine horizontale Verschiebung der Magnete 49a und 49b verursachen. Die in Fig. 16(A) und 16(B) dargestellten Zustände verursachen Differenzen in den magnetischen Einflüssen der Magnete 49a und 49b auf das Hallelement 46. Wenn die Magnete 49a oder 49b durch Vibrationen des Stellantriebes 5 oder ähnliches in horizontaler Richtung frei verschieblich sind, so kann das Hallelement 46 den Magnetismus der Magnete 49a und 49b nicht zuverlässig erfassen. Im ungünstigsten Fall erfaßt das Hallelement 46 eine durch die horizontale Veränderung der Magnete 49a und 49b verursachte Änderung des Magnetismus, auch wenn die Magnete 49a und 49b nicht nach oben oder unten verschoben wurden, was wahrscheinlich zu einer Fehlfunktion des Stellantriebes 5 führt.

Nach der erfindungsgemäßen Ausführungsform werden jedoch die beiden Magnete 49a und 49b fest an das Eisenstück 67 angezogen, so daß ein Abstand D₃ zwischen den linken Endflächen der Magnete 49a und 49b und dem Trennglied 43 immer unter allen Umständen konstant gehalten werden kann, wie in Fig. 14 dargestellt ist. Daher ist es möglich, effektiv die vorstehend beschriebene fehlerhafte Erfassung durch das Hallelement 46 (d.h. die Fehlfunktion des Stellantriebes 5) zu verhindern.

Des weiteren können, wie Fig. 12 zeigt, die Einstellschraube 41 und die Regulierfeder 42 in einer zweiten Ausführungsform ersetzt werden. In der zweiten Ausführungsform ist zwischen der Oberseite des Zahnrades 11 und dem Basisbereich 30 ein Ring 68 vorgesehen. Wenn das Zahnrad 11 gemeinsam mit dem Kolben 16 nach oben bewegt wird, schlägt der Ring 68 an der Unterseite des Basisbereichs 30 an und begrenzt, wie in Fig. 13 gezeigt, die Aufwärtsbewegung. Die Verwendung des Ringes 68 erlaubt es so, den Aufwärtshub des Kolbens 16 in Übereinstimmung mit der Stärke des Ringes einzustellen. Die Verwendung des Ringes 68 trägt zur Vereinfachung der Konstruktion des Zahnradoberteiles im Vergleich zu der Konstruktion, bei der die Einstellschraube 41 und die Regulierfeder 42 Verwendung finden, bei.

Auch wenn hier nur zwei Ausführungsformen der vorliegenden Erfindung beschrieben sind, ist für den Fachmann offensichtlich, daß die vorliegende Erfindung in vielen weiteren bestimmten Ausführungsformen ausführbar ist. Insbesondere sei angemerkt, daß die vorliegende Erfindung ebenso für einen Vergasermotor wie auch für einen Einspritzmotor Verwendung finden kann. In den dargestellten Ausführungsformen sind das Hallelement 46 feststehend und die beiden Magnete 49a und 49b verschieblich angeordnet. Die Konstruktion des Stellantriebs kann jedoch so geändert werden, daß das Hallelement 46 verschieblich und die Magnete 49a und 49b feststehend vorgesehen sind.

In der in Fig. 1 darrgestellten Ausführungsform wird die Regulierfeder 42 verwendet, um das Lösen der Einstellschraube 41 zu verhindern. Die Einstellschraube 41 kann durch eine Einstellschraube 60 ersetzt werden, die, wie in Fig. 17 gezeigt, zwei an ihrer Umfangsfläche vertikal verlaufende Nuten 61 aufweist.

Fig. 18 stellt dar, wie die Einstellschraube 60 in die Buchse 40 des Zahnrades 11 eingesetzt ist. Nach dem Einsetzen der Einstellschraube 60 in die Buchse 40 und dem dadurch erfolgenden Einstellen der Stellungen der Magnete 49a und 49b durch die Einstellschraube, wird ein Bereich Q um die Schraube 60 erwärmt. Der Bereich Q des Zahnrades 11 schmilzt, und der geschmolzene Kunststoff fließt in die Nuten 61. Nach dieser Wärmebehandlung härtet der geschmolzene Kunststoff in den Nuten 61 aus und bildet so eine Drehsicherung für die Einstellschraube 60. Dadurch wird das Lösen der Einstellschraube 60 verhindert.

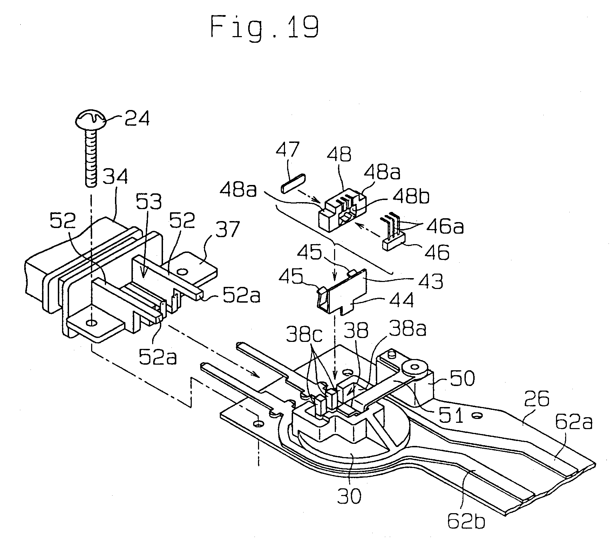

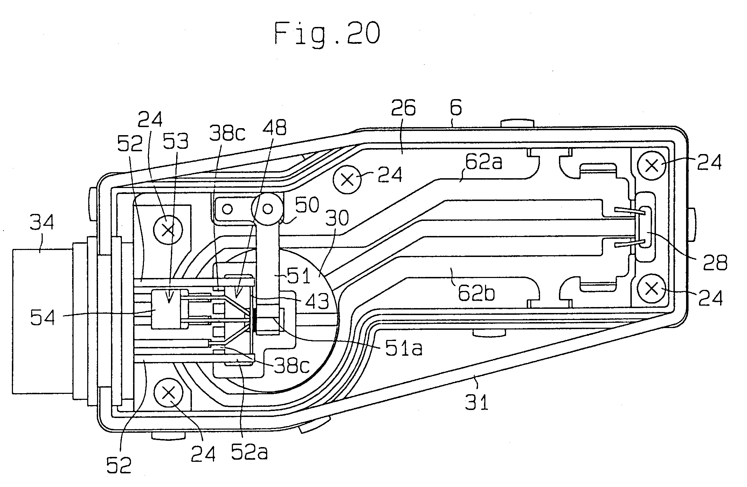

Während in den bisher dargestellten Ausführungsformen das Hallelement 46 im ersten Raum 38 mit einer Kappe 48 gehalten ist, kann auch eine andere, nachfolgend besprochene Konstruktion verwendet werden. Dabei sind, wie in Fig. 19 und 20 dargestellt, an beiden Seiten im oberen Bereich der Kappe 48 zwei Absätze 48a ausgebildet. In der Kappe 48 ist weiterhin eine Ausnehmung 48b zum Aufnehmen des Hallelements 46 ausgeformt. Der Abstand zwischen den beiden Wänden 52 des Steckelements 34 wird kleiner gewählt als die Breite des ersten Raumes 38a. An den Enden der jeweiligen Wände 52 sind überstehend Ansätze 52a ausgebildet, die mit den jeweiligen Absätzen 48a in Eingriff kommen.

Der Stützbügel 47 und die Kappe 48, in dessen Ausnehmung 48b das Hallelement 46 gehaltert ist, sind zwischen dem Hauptkörper des Trenngliedes 43 und den Haltern 45 gehalten. Das Trennglied 43 wird anschließend in den ersten Raum 38 eingedrückt. Das Steckelement 34 wird durch Einführen des Leiterpaares 62a und 62b in das Steckelement 34 an der Innenplatte 26 angebracht. Dabei kommen die Ansätze 52a der Wände 52 mit den Absätzen 48a in Eingriff. Durch diese Konstruktion verhindern die Ansätze 52a das Herausgleiten der Kappe 48 aus dem ersten Raum, auch wenn die Kappe 48 vibriert.

Wird beim Zusammenbau der Vorrichtung das Trennglied 43, das die Kappe 48 und den Stützbügel 47 aufnimmt, in den ersten Raum 38a eingesetzt, so kann möglicherweise die Druckkraft nicht ausreichend sein. In diesem Fall kommen die Ansätze 52a der Wände 52 nicht mit den jeweiligen Absätzen 48a in Eingriff. Wenn dieser Eingriff nicht zustande kommt, kann ein Mitarbeiter feststellen, daß das Trennglied 43 nicht ordnungsgemäß im ersten Raum 38a eingesetzt ist. Dies entspricht einer Prüfung des Zusammenbaus, wodurch die Auslieferung von fehlerhaften Vorrichtungen verhindert wird.

## Patentansprüche

1. Sensoreinrichtung zum Erfassen der Bewegung eines beweglichen Baugliedes (16), umfassend ein Magnetelement mit wenigstens zwei Magneten (49a,49b), die nebeneinander dergestalt angeordnet sind, daß aneinanderliegende Magnetpole verschiedene Polaritäten aufweisen und ein Sensorelement (46) zum Erfassen des Magnetflusses des Magnetelements, wobei die Magnete (49a,49b) oder das Sensorelement (46) in derselben Richtung wie das bewegliche Glied (16) bewegbar sind und vom beweglichen Glied (16) bewegt werden, wobei beim Auftreten einer derartigen Bewegung das Sensorelement (46) eine Veränderung des Magnetflusses erfaßt, der von den aneinanderliegenden Magneten (49a,49b) erzeugt wird, dadurch **gekennzeichnet,** daß ein Bauglied (67) aus magnetischem Stoff die Magnete (49a,49b) durch deren Magnetkraft anzieht, um zwischen den Magneten (49a,49b) und dem Sensorelement (46) einen konstanten Abstand zu halten.

2. Sensoreinrichtung nach Anspruch 1, wobei das magnetische Bauglied (67) an der Oberfläche, die mit den Magneten (49a, 49b) in Berührung steht, mit einer Schicht (67a) versehen ist, und wobei die Schicht (67a) aus einem Kunststoff zur Verbesserung der Gleitfähigkeit der Magnete (49a, 49b) besteht.

3. Sensoreinrichtung nach Anspruch 1 oder 2, weiter umfassend einen Stützbügel (47), der dergestalt angeordnet ist, daß das Sensorelement (46) zwischen dem Stützbügel (47) und den Magneten (49a, 49b) befindlich ist.

4. Sensoreinrichtung nach mindestens einem der Ansprüche 1 bis 3, wobei das Sensorelement ein Hallelement (46) umfaßt.

5. Stellantrieb für eine Motorleerlaufsteuerung mit einer in einem Einlaßkrümmerrohr (1) angeordneten Drosselklappe (2) und einem Drosselklappenhebel (4), der in Übereinstimmung mit dem Öffnungsgrad der Drosselklappe (2) positioniert ist, wobei der Stellantrieb eine bewegliche Kolbeneinrichtung (11, 16, 25), die bei geschlossener Drosselklappe (2) vom Drosselklappenhebel (4) beaufschlagt wird, Antriebseinrichtungen (7, 11, etc.) zur zwangsweisen Bewegung der Kolbeneinrichtung (11, 16, 25) gegen die Druckkraft des Drosselklappenhebels (4), die in der Lage sind, den Öffnungsgrad der Drosselklappe (2) über die Kolbeneinrichtung (11, 16, 25) und den Drosselklappenhebel (4) einzustellen, eine Erfassungseinrichtung (46, 49a, 49b) zum Erfassen, ob die Drosselklappe (2) geöffnet oder geschlossen ist, eine Steuereinrichtung (36) zur Steuerung der Antriebseinrichtung anhand des von der Erfassungseinrichtung (49a, 49b, 46) festgestellten Ergebnisses, um den Öffnungsgrad der Drosselklappe (2) richtig einzustellen, wenn der Motor im Leerlauf läuft, umfaßt, wobei die Erfassungseinrichtung eine Sensoreinrichtung gemäß der Ansprüche 1 bis 4 aufweist und entweder die Magneteinrichtung (49a, 49b) oder der Sensor (46) in derselben Richtung wie die Kolbeneinrichtung (11, 16, 25) bewegbar sind und von der Kolbeneinrichtung (11, 16, 25) bewegt werden, wenn die Drosselklappe (2) geschlossen wird, wobei beim Auftreten dieser Bewegung der Sensor (46) eine Veränderung des Magnetflusses erfaßt, der von den beiden aneinanderliegenden Magneten (49a, 49b) erzeugt wird.

6. Stellantrieb nach Anspruch 5, weiter umfassend eine erste Feder (51) zum Andrücken der Magnete (49a, 49b) in Richtung der Kolbeneinrichtung (11, 16, 25).

7. Stellantrieb nach Anspruch 5 oder 6, wobei die Kolbeneinrichtung einen beweglichen Kolben (16), ein Zahnrad (11), das mit dem Kolben (16) bewegbar ist, und eine zweite Feder (25) umfaßt, die den Kolben (16) und das Zahnrad (11) gegen die Druckwirkung des Drosselklappenhebels (4) drückt.

8. Stellantrieb nach Anspruch 7, wobei die Magnete (49a, 49b) auf dem Zahnrad (11) angeordnet sind und das Zahnrad (11) eine Einstellschraube (41) zum Einstellen der Stellung der Magnete (49a, 49b) relativ zum Sensor (46) aufweist.

9. Stellantrieb nach Anspruch 7, wobei die Kolbeneinrichtung weiter ein Regulierglied (68) aufweist, das zwischen dem Zahnrad (11) und einem Bauglied (30) zum Tragen der Magnete (49a, 49b) bzw. des Sensors (46) angeordnet ist, um die Relativbewegung der Magnete (49a, 49b) zum Sensor (46) zu begrenzen.

## Claims

1. Sensor device for detecting the movement of a movable component (16), comprising a magnetic member with at least two magnets (49a, 49b) which are located next to one another in such a way that magnetic poles adjacent to one another have different polarities, and Sensor member (46) for detecting the magnetic flux of the magnetic member, the magnets (49a, 49b) or the sensor member (46) being movable in the same direction as the movable member (16), and are moved by the movable member (16), whereby upon occurrence of such a movement, the sensor member (46) detects an alteration in the magnetic flux which is generated by the adjacently-lying magnets (49a, 49b), characterised in that a component (67) made of magnetic material attracts the magnets (49a, 49b) by reason of its magnetic power, in order to maintain a constant distance between the magnets (49a, 49b) and the sensor member (46).

2. Sensor device according to Claim 1, the magnetic component (67), on the surface which is in contact with the magnets (49a, 49b), being provided with a coating (67a) and whereby the coating (67a) comprises a plastics material in order to improve the sliding quality of the magnets (49a, 49b).

3. Sensor device according to Claim 1 or 2, further comprising a support bracket (47) which is arranged in such a way that the sensor member (46) is located between the support bracket (47) and the magnets (49a, 49b).

4. Sensor device according to at least one of Claims 1 to 3, the sensor member comprising a Hall element (46).

5. Actuating drive for an engine idling control with a throttle valve (2) located in an angled inlet tube (1) and with a throttle valve lever (4) which is positioned in coincidence with the degree of opening of the throttle valve (2), the actuating drive comprising a movable piston device (11, 16, 25), which is loaded by the throttle valve lever (4) when the throttle valve (2) is closed, drive devices (7, 11, etc.) for automatic movement of the piston device (11, 16, 25) against the pressure of the throttle valve lever (4), and which are capable of setting the degree of opening of the throttle valve (2) via the piston device (11, 16, 25) and the throttle valve lever (4), a detector device (46, 49a, 49b) in order to detect whether the throttle valve (2) is open or closed, a control device (36) for controlling the drive device with reference to the result ascertained by the detector device (49a, 49b, 46), in order correctly to set the degree of opening of the throttle valve (2) when the engine is idling, the detector device having a sensor device according to Claims 1 to 4, and either the magnetic device (49a, 49b) or the sensor (46) are movable in the same direction as the piston device (11, 16, 25) and are moved by the piston device (11, 16, 25) when the throttle valve (2) is closed, whereby upon occurrence of this movement the sensor (46) detects an alteration in the magnetic flux which is generated by the two adjacent magnets (49a, 49b).

6. Actuating drive according to Claim 5, further comprising a first spring (51) for pressing the magnets (49a, 49b) in the direction of the piston device (11, 16, 25).

7. Actuating drive according to Claim 5 or 6, the piston device comprising a movable piston (16), a gear wheel (11) which is movable with the piston (16), and a second spring (25) which presses the piston (16) and the gear wheel (11) against the pressure of the throttle valve lever (4).

8. Actuating drive according to Claim 7, the magnets (49a, 49b) being located on the gear wheel (11) and the gear wheel (11) having a setting screw (41) for setting the position of the magnets (49a, 49b) relative to the sensor (46).

9. Actuating drive according to Claim 7, the piston device further having a regulating member (68) which is located between the gear wheel (11) and a component (30) for carrying the magnets (49a, 49b) or the sensor (46), in order to restrict the movement of the magnets (49a, 49b) relative to the sensor (46).

## Revendications

1. Dispositif de détection du déplacement d'un composant mobile (16), comprenant un élément magnétique comportant au moins deux aimants (49a, 49b), disposés l'un à côté de l'autre de façon à ce que des pôles magnétiques limitrophes soient de polarité différente, et un élément de détection (46), pour intercepter le flux magnétique de l'élément magnétique, les aimants (49a, 49b) ou l'élément de détection (46) pouvant être déplacés dans la même direction que l'organe mobile (16), et mis en mouvement par l'organe mobile (16), auquel cas, à l'apparition d'un tel mouvement, l'élément de détection (46) détecte une variation du flux magnétique produit par les aimants voisins (49a, 49b), caractérisé en ce qu'un composant (67) en matériau magnétique sollicite les aimants (49a, 49b), par leur force magnétique, pour maintenir un écartement constant entre les aimants (49a, 49b) et l'élément de détection (46).

2. Dispositf de détection selon la revendication 1, dans lequel le composant magnétique (67) est doté d'un revêtement (67a) sur sa surface en contact avec les aimants (49a, 49b), lequel revêtement (67a) consiste en une matière synthétique destinée à améliorer la capacité de glissement des aimants (49a, 49b).

3. Dispositif de détection selon la revendication 1 ou 2, comprenant en outre un étrier-support (47) disposé de façon telle que l'élément de détection (46) soit positionné entre l `étrier support (47) et les aimants (49a, 49b).

4. Dispositif de détection selon au moins l'une des revendications 1 à 3, dans lequel l'élément de détection comprend un élément à effet Hall (46).

5. Actionneur pour la régulation du ralenti d'un moteur, comportant un papillon des gaz (2) monté dans un collecteur d'admission (1), et un levier de papillon (4), positionné en concordance avec le degré d'ouverture du papillon des gaz (2), cet actionneur comprenant un mécanisme à piston mobile (11, 16, 25), contacté par le levier de papillon (4) lorsque le papillon des gaz (2) est en position de fermeture, des mécanismes d'entraînement (7, 11, etc.) pour la mise en mouvement forcée du mécanisme à piston (11, 16, 25) à l'encontre de la force de pression du papillon des gaz (4), lesquels sont aptes à régler le degré d'ouverture du papillon des gaz (2) par l'intermédiaire du mécanisme à piston (11, 16, 25) et du levier de papillon (4), un dispositif de détection (46, 49a, 49b) pour détecter si le papillon des gaz (2) est ouvert ou fermé, un mécanisme de commande (36) pour commander le mécanisme d'entraînement en fonction du résultat constaté par le dispositif de détection (46, 49a, 49b), afin d'ajuster correctement le degré d'ouverture du papillon des gaz (2) lorsque le moteur tourne à vide, actionneur dans lequel le dispositif de détection comprend un dispositif de détection selon les revendications 1 à 4, et dans lequel soit le mécanisme magnétique (49a, 49b), soit le capteur (46) peuvent être déplacés dans la même direction que le mécanisme à piston (11, 16, 25), et mis en mouvement par le mécanisme à piston (11, 16, 25) lorsque le papillon des gaz (2) se ferme, le capteur (46) détectant, à l'apparition de ce mouvement, une variation du flux magnétique produit par les deux aimants voisins (49a, 49b).

6. Actionneur selon la revendication 5, comprenant en outre un premier ressort (51) servant à solliciter les aimants (49a, 49b) dans la direction du mécanisme à piston (11, 16, 25).

7. Actionneur selon l'une des revendications 5 ou 6, dans lequel le mécanisme à piston comprend un piston mobile (16), une roue dentée (11) susceptible d'être mise en mouvement avec le piston (16), et un second ressort (25) qui pousse le piston (16) et la roue dentée (11) à l'encontre de la pression du levier de papillon (4).

8. Actionneur selon la revendication 7, dans lequel les aimants (49a, 49b) sont disposés sur la roue dentée (11), et où la roue dentée (11) comporte une vis d'ajustage (41) pour ajuster la position des aimants (49a, 49b) par rapport au capteur (46).

9. Actionneur se don la revendication 7, dans lequel le mécanisme à piston comprend en outre un régulateur (68) disposé entre la roue dentée (11) et un module (30) portant les aimants (49a, 49b) ou le capteur (46), afin de limiter le mouvement relatif des aimants (49a, 49b) par rapport au capteur (46).
